# NOUVEAU FASCICULE DE BREVET EUROPEEN

(11) **EP 1 078 524 B2**
(45) Date de publication et mention de la décision concernant l'opposition: **17.06.2009**
(45) Mention de la délivrance du brevet: 14.08.2002
(21) Numéro de dépôt: 99917016.0
(22) Date de dépôt: 06.05.1999
(51) Int. Cl.: H04N 7/16, H04N 7/167

(54) **MECANISME D'APPARIEMENT ENTRE UN RECEPTEUR ET UN MODULE DE SECURITE**
ANPASSVORRICHTUNG ZWISCHEN EINEM EMPFÄNGER UND EINEM SICHERHEITSMODUL
MECHANISM FOR MATCHING A RECEIVER WITH A SECURITY MODULE

(30) Priorité: 07.05.1998 WO PCT/IB98/00681
(43) Date de publication de la demande: 28.02.2001
(73) Titulaire: Nagracard S.A., 1033 Cheseaux-sur-Lausanne (CH)
(72) Inventeur: KUDELSKI, André, CH-1095 Lutry (CH); SASSELLI, Marco, CH-1803 Chardonne (CH)
(74) Mandataire: Wenger, Joel-Théophile
(86) Numéro de dépôt international: PCT/IB1999/000821
(87) Numéro de publication internationale: WO 1999/057901

(56) Documents cités:
- EP-A- 0 809 402
- WO-A-97/38530
- WO-A-99//18729
- CUTTS D J: "DVB CONDITIONAL ACCESS" ELECTRONICS AND COMMUNICATION ENGINEERING JOURNAL, vol. 9, no. 1, 1 février 1997, pages 21-27, XP000722905
- WRIGHT D T: "CONDITIONAL ACCESS BROADCASTING: DATACARE 2. AN OVER-AIR ENABLED SYSTEM FOR GENERAL PURPOSE DATA CHANNELS" BBC RESEARCH AND DEVELOPMENT REPORT, no. 10, 1 août 1988, pages 1-18, XP000577263
- BUER M ET AL: "INTEGRATED SECURITY FOR DIGITAL VIDEO BROADCAST" IEEE TRANSACTIONS ON CONSUMER ELECTRONICS, vol. 42, no. 3, 1 août 1996, pages 500-503, XP000638531

## Description

### DOMAINE TECHNIQUE

Cette invention se rapporte à un système de contrôle de transfert d'informations entre un récepteur et un module de sécurité, notamment pour un système de télévision à péage, ainsi qu'à une méthode de contrôle du transfert d'informations brouillées.

### ARRIERE-PLAN DE L'INVENTION

Un système de débrouillage de télévision à péage est composé d'un récepteur et d'un module de sécurité. Ce module peut être détachable ou fixe. Le récepteur a pour mission de débrouiller les signaux reçu. Le module de sécurité a pour mission principale de contrôler l'opération en vérifiant l'autorisation de débrouillage et en fournissant, le cas échéant, les informations nécessaires au fonctionnement du module de débrouillage, par exemple par la fourniture de vecteurs de débrouillage appelés "control word".

Les systèmes existants utilisent des récepteurs qui interrogent leurs modules de sécurité, et ceux-ci répondent en fournissant les informations nécessaires au débrouillage. A un temps donné, pour la même émission diffusée, tous les modules de sécurité répondent la même information. Du fait que les informations circulant entre le module de sécurité et le récepteur sont de faible débit (de l'ordre de 20 à 30 Octets/sec), des fraudeurs peuvent utiliser ces informations pour les diffuser publiquement, par exemple par le biais d'Internet.

Un tel système est illustré dans le document "DVD Conditional Access" écrit par David Cutts dans la revue "Electronics & Communication Engineering Journal" de février 1997. Il est décrit un système standardisé pour le débrouillage des flux vidéos et audio provenant de plusieurs fournisseurs de prestations. Le module de sécurité, dénommé CA (conditional access) est chargé de délivrer les mots de contrôle CW. Ce module peut accessoirement utiliser une carte à puce (Smart Card) pour la fonction de débrouillage. Une fois les informations débrouillées dans le module CA, les mots de contrôle CW sont retournés au décodeur pour obtenir les informations en clair.

Dans une publication antérieure intitulée "Conditional Access Broadcasting: Datacare 2, an Over-Air Enabled System for General Purpose Data Channels", publiée le 1 août 1988 dans la revue BBC Research and Development Report N°10, il est décrit un module indépendant (Conditional Access Module) en charge de recevoir et de décrypter les informations nécessaires au débrouillage. Ce module gère les clés propres au système et délivre les mots de contrôle indispensables au débrouillage des émissions vidéos. Dans ce type de module, un fois les mots de contrôle déchiffrés, ils sont envoyés en clair à l'unité en charge du débrouillage.

Le document WO 99/18729 décrit une solution pour éviter la diffusion d'informations résultant du module de sécurité. Le numéro de série du décodeur est utilisé pour la génération de la clé de chiffrement des données entre le décodeur et le module de sécurité.

Le problème se pose alors de rendre interdépendants un récepteur et un module de sécurité afin que :
- le module de sécurité donné ne puisse être utilisé que dans le récepteur pour lequel le dit module de sécurité a été prévu;
- le flux d'informations échangé entre le module de sécurité et le récepteur soit unique. Cette unicité empêche que la diffusion publique de ce flux permette à d'autres récepteurs de travailler sans le module de sécurité prévu à cet effet.

### EXPOSE DE L'INVENTION

La solution proposée aux problèmes cités ci-dessus utilise au moins une clé de chiffrement propre au récepteur. Cette (ou ces) clé(s) est(sont) appelée(s) clé d'appariement. Au moins une des clés est différente pour chaque récepteur. Cette (ou ces) clé(s) est(sont) installée(s) dans la mémoire non volatile du récepteur, soit à la fabrication du dit récepteur, soit à une étape ultérieure. Le récepteur ne fournit au monde extérieur aucun moyen d'accès à cette (ou ces) clé(s).

Un moyen possible pour programmer cette clé dans le module de sécurité est d'utiliser le système d'information central qui gère le parc de récepteurs et qui peut noyer dans le flux de la transmission vidéo des informations pour la programmation de cette clé dans la mémoire non volatile et secrète des modules de sécurité. Le formatage de cette procédure est bien entendu tenu secret.

L'invention est exposée dans les revendications.

Pour la suite de l'exposé, il est précisé que le module de sécurité est localement connecté au récepteur pour constituer un système de réception de télévision à péage.

Lors d'un transfert d'informations sensibles et/ou nécessaires au fonctionnement du système du module de sécurité vers le récepteur (typiquement des "control words", mais d'autres informations peuvent être transférées ainsi), le module de sécurité chiffre ces informations à l'aide d'une ou de plusieurs clés d'appariement uniques, communes au seul couple récepteur/module de sécurité. La méthode de chiffrement est quelconque mais connue du module de sécurité, et le récepteur connaît la méthode de déchiffrement correspondante. Une fois reçues par le récepteur, ces informations sont alors déchiffrées par le dit récepteur en utilisant la méthode de déchiffrement connue et la clé d'appariement stockée dans sa mémoire non volatile. Les dites informations sont alors en clair et utilisables par le dit récepteur.

L'invention propose donc un système de contrôle de transmission d'informations entre un récepteur et un module de sécurité, notamment pour un système de télévision à péage, où les informations transmises sont chiffrées et déchiffrées au moyen d'au moins une clé de chiffrement unique, stockée d'une part dans le récepteur, et d'autre part dans le module de sécurité.

L'invention concerne également un système de débrouillage d'informations brouillées et un système de télévision à péage comportant un système de contrôle de transmission.

D'autre part, l'invention concerne une méthode de contrôle de transmission d'informations entre un récepteur et un module de sécurité, notamment pour un système de télévision à péage, caractérisé en ce que l'on stocke au moins une clé de chiffrement unique, d'une part dans le récepteur, et d'autre part dans le module de sécurité, et que l'on chiffre et déchiffre les informations transmises entre le récepteur et le module de sécurité au moyen d'au moins une dite clé de chiffrement unique.

Cette solution selon l'invention répond aux problèmes posés. En effet:
- un module de sécurité inséré dans un autre récepteur que celui avec lequel le dit module de sécurité a été apparié fournira à cet autre récepteur un flux d'informations sensibles et/ou nécessaires au fonctionnement du système chiffré avec une clé ne correspondant pas à celle utilisée pour le déchiffrer. Le résultat est alors inutilisable;
- un flux d'informations sensibles et/ou nécessaires au fonctionnement du système provenant d'un module de sécurité ne peut être distribué à plusieurs récepteurs. Seul le récepteur apparié avec la carte fournissant ce flux d'informations sensibles et/ou nécessaire est à même de déchiffrer le dit flux avec succès.

Le système comprend un mécanisme de vérification de l'appariement. Le système d'information central peut inscrire un numéro personnel au récepteur dans le module de sécurité apparié avec le dit récepteur, par exemple généré d'une manière aléatoire par ce dernier, ou simplement utiliser son numéro de série. Un moyen est offert au récepteur de vérifier librement ce numéro personnel inscrit dans le module de sécurité et de le comparer à celui stocké dans sa mémoire non volatile.

Ce mécanisme a l'avantage de ne pas utiliser des données impropres. Le résultat d'un chiffrement suivi d'un déchiffrement par une clé différente fournit usuellement un résultat pseudo-aléatoire. Si le résultat n'est pas reconnu comme faux et que ce résultat est utilisé tel quel, il pourrait en résulter des dommages pour le récepteur ou les appareils connectés à celui-ci.

Certains types de récepteurs comportent un module de débrouillage détachable. Ce module prend en charge un certain nombre d'opérations parmi lesquelles l'opération de débrouillage des signaux reçus. Le transfert d'informations sensibles s'effectue alors entre le module de sécurité détachable et ce module de débrouillage détachable. Le mécanisme de chiffrement de la communication décrit ci-dessus entre un récepteur et un module de sécurité est alors reporté tel quel entre le module de sécurité détachable et le module de débrouillage détachable.

De la même manière, le mécanisme d'appariement décrit ci-dessus entre le module de sécurité et le récepteur est alors reporté tel quel entre le module de sécurité détachable et le module de débrouillage détachable.

Un transfert de signaux débrouillés s'effectue alors entre le module de débrouillage détachable et le récepteur. Le mécanisme de chiffrement de la communication de même que le mécanisme d'appariement décrit ci-dessus, entre le module de sécurité et le récepteur, est alors reporté tel quel entre le récepteur et le module de débrouillage détachable.

Les fonctions assurées par le module de débrouillage détachable et le module de sécurité détachable peuvent être exécutées par un seul module appelé module de débrouillage et de sécurité détachable. Le mécanisme d'appariement précédemment décrit est alors reporté tel quel entre le module de débrouillage et de sécurité détachable et le récepteur.

Dans tous les cas décrits ci-dessus, la ou les clés d'appariement peuvent être utilisées pour chiffrer un flux de données sensibles et/ou nécessaires au fonctionnement du système dans le sens opposé, en intervertissant respectivement :
- récepteur et module de sécurité détachable;
- module de débrouillage détachable et module de sécurité détachable ;
- récepteur et module de débrouillage détachable;
- récepteur et module de débrouillage et de sécurité détachable.

Dans tous les cas où une clé d'appariement est propre à un appareil (récepteur ou module détachable), les mêmes principes s'appliquent à l'utilisation d'une (ou de plusieurs) clé(s) d'appariement propre(s) à un groupe d'appareils.

### BRÈVE DESCRIPTION DES FIGURES

La Figure 1 illustre une configuration mettant en oeuvre un récepteur et un module de sécurité détachable.

La Figure 2 illustre une configuration mettant en oeuvre un récepteur, un module de débrouillage détachable et un module de sécurité détachable.

La Figure 3 illustre une configuration mettant en oeuvre un récepteur et un module de débrouillage et de sécurité détachable.

### DESCRIPTION DETAILLEE

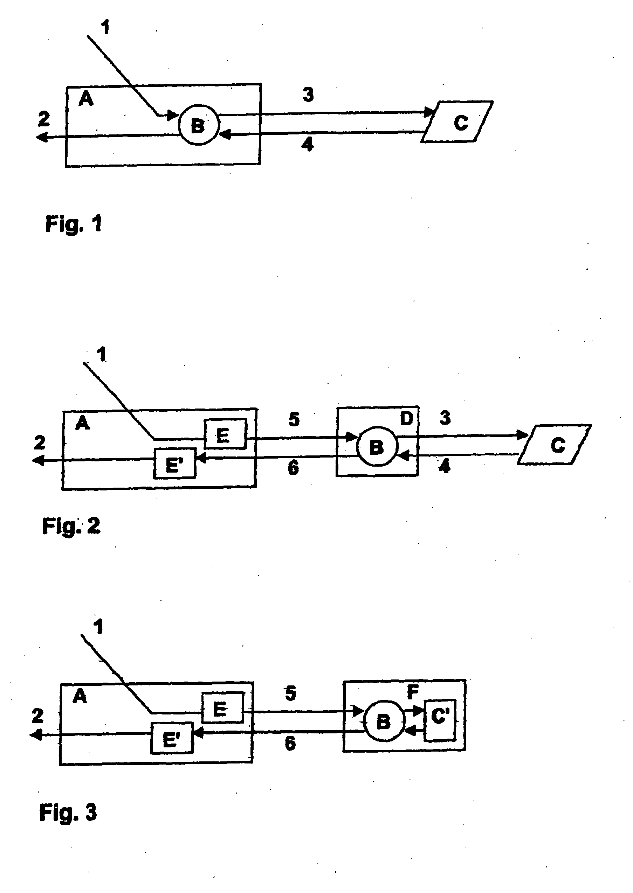

Le récepteur A de la Figure 1 reçoit un flux d'informations vidéo brouillées 1 d'une source telle qu'un récepteur satellite ou par câble. Ce flux, de l'ordre de plusieurs Megabits par seconde est mis en forme dans le récepteur A puis transmis à une unité de contrôle B qui est responsable du débrouillage et de la gestion de l'autorisation d'accès aux informations vidéos brouillées. Pour ce faire, cette unité de contrôle B interroge périodiquement le module de sécurité détachable C (canal 3) lequel répond à celui-ci par un flux de données sensibles et/ou nécessaires au fonctionnement de l'unité de contrôle B (canal 4). Ces échanges se font à des débits faibles et peuvent être facilement traités par les microprocesseurs des cartes intelligentes disponible sur le marché. Selon l'invention, le module de sécurité détachable C comprend au moins une clé de chiffrement K dans une mémoire non volatile grâce à laquelle sont chiffrées les données sensibles et/ou nécessaires au fonctionnement de l'unité de contrôle B (canal 4) vers le récepteur A. Cette clé K est unique au récepteur A et inscrite au module de sécurité détachable C, rendant le flux d'informations 4 unique à cet ensemble. La diffusion publique de ces informations 4 ne sera plus d'aucune utilité à d'autres récepteurs car pour ces derniers, n'étant pas en possession de la même clé K, le flux d'informations est parfaitement incompréhensible. Au moyen des informations 4, l'unité de contrôle B peut retrouver le signal vidéo débrouillé 2, celui-ci étant traité puis transmis sous une forme standard (PAL, SECAM, NTSC) au moniteur vidéo.

Une variante de l'invention met en oeuvre un chiffrement de même nature des informations 3 envoyées au module de sécurité détachable C soit par la même dé K, soit par une clé différente J, unique et propre à l'ensemble formé par le récepteur A et le module de sécurité détachable C. Ainsi, toute tentative visant à retrouver la clé K du flux d'informations 4 est rendue beaucoup plus difficile.

La Figure 2 illustre une variante utilisant un module de débrouillage détachable D intégrant l'unité de contrôle B. Dans ce cas, le flux vidéo brouillé 1 est mis en forme par le récepteur A et acheminé vers le module de débrouillage détachable D. Le mode de fonctionnement décrit pour la Figure 1 entre le récepteur A et le module de sécurité détachable C est cette fois appliqué au dialogue entre le module de débrouillage détachable D et le module de sécurité détachable C. Le clé K est inscrite dans une partie secrète du module de débrouillage détachable D en lieu et place du récepteur A. Ainsi, les informations fournies par le module de sécurité détachable C au module de débrouillage détachable D sont chiffrées et donc sans valeurs pour un autre module de débrouillage détachable D.

On constate alors que les informations transmises au récepteur A constitue en un flux d'informations vidéos débrouillées 6 et qui peuvent être facilement exploitables, pour des copies illicites par exemple. Dans une variante de l'invention, le flux 6 est chiffré dans le module de débrouillage détachable D avant d'être transmis au récepteur A pour déchiffrage par l'unité de déchiffrement E'. Cette opération est effectuée par une clé K' propre uniquement à l'ensemble récepteur A et au module de débrouillage détachable D. De ce fait, le flux d'informations 6 n'a plus aucune signification et ne peut être compris que par le récepteur A disposant de la même clé K'.

Dans le flux vidéo brouillé 1, le récepteur A peut y adjoindre des informations de contrôle à destination du module de débrouillage détachable D. Afin d'éviter que ces informations soient publiques et ouvre une porte à la compréhension du mécanisme de chiffrement, ces informations sont chiffrées par l'unité de chiffrement E pour obtenir un flux vidéo brouillé 6 contenant des informations de contrôle chiffrées.

La Figure 3 illustre une variante de l'invention où le module de sécurité détachable est intégré dans un module de débrouillage et de sécurité détachable F. Ce module a pour fonction de débrouiller et de gérer l'autorisation des signaux vidéos reçus par le récepteur A. Selon l'invention, ce module comprend une clé unique de chiffrement, propre au récepteur A et inscrite dans ce module de débrouillage et de sécurité détachable F. De cette manière, le flux vidéo débrouillé 6 est chiffré par cette clé et transmis sous cette forme au récepteur A. Celui-ci, grâce à l'unité de déchiffrement E', et en utilisant la même clé unique, pourra retrouver le signal vidéo en clair.

Par analogie au fonctionnement décrit à la Figure 2, les informations de contrôle contenues dans le flux de vidéo brouillé 1 peuvent être chiffrées au moyen d'une clé unique de chiffrement par l'unité E avant leur transmission vers le module de débrouillage et de sécurité détachable F.

Dans tous les exemples décrit dans les Figures 1 à 3, le contrôle de l'appariement peut s'effectuer. Dans le cas de la Figure 1, le récepteur A inscrit un numéro personnel, par exemple son numéro de série, dans le module de sécurité détachable C. Ainsi, le récepteur peut à tout instant, vérifier que le module de sécurité détachable C est bien celui qui lui est destiné. Dans le cadre de l'exemple illustré à la Figure 2, le contrôle peut se faire à deux niveaux: un premier niveau entre le module de débrouillage détachable D et le module de sécurité détachable C; et un deuxième niveau entre le module de débrouillage détachable D et le récepteur A. Ce deuxième niveau est particulièrement important si l'on chiffre les informations débrouillées 6 en direction du récepteur A.

Dans la solution de la Figure 3, le contrôle de l'appariement s'effectue entre le récepteur A et le module de débrouillage et de sécurité détachable F.

Dans une forme particulière de l'invention, le récepteur A est un décodeur MPEG utilisant des "control words" (informations nécessaires au débrouillage du signal) pour le débrouillage du signal vidéo. Ces "control words" sont fournis par le module de sécurité détachable C. Ce module, par exemple une carte à puce intelligente, comprend une mémoire non volatile pour leur stockage.

Dans une forme particulière de l'invention, le module de débrouillage détachable D est une carte de type PCMCIA incluant un décodeur MPEG (unité de contrôle B).

Dans une forme particulière de l'invention, le module de débrouillage et de sécurité détachable F est réalisé sous forme d'une carte à puce intelligente intégrant un décodeur MPEG et un module de sécurité C'.

Dans une forme particulière de l'invention, la clé unique de chiffrement K est commune à un groupe de récepteur. Cette possibilité est intéressante, par exemple, dans une école disposant de plusieurs récepteurs auxquels l'on va appliquer le même module de sécurité détachable suivant les besoins. De la même manière, plusieurs modules de sécurité détachable incluent la même clé de chiffrement pour pouvoir être placés dans n'importe lequel des récepteurs du groupe. Dans ce cas, le contrôle d'appariement se fait sur un numéro qui n'est plus propre à un récepteur mais à un groupe de récepteur. Une combinaison peut être réalisée avec un numéro composé de deux parties, l'une qualifiant le groupe, l'autre qualifiant le récepteur. L'unicité du numéro personnel est respectée, le test de conformité d'appariement se faisant alors plus que sur la partie groupe de ce numéro.

## Revendications

1. Système de réception de télévision à péage comprenant une pluralité de récepteurs (A) et une pluralité de modules de sécurité (C,F) dont un récepteur (A) est connecté à un module de sécurité (C, F), ce récepteur (A) recevant des informations de débrouillage de la part du module de sécurité (C,F), dans lequel au moins une partie des informations (4, 6) sont chiffrées avant d'être transmises au récepteur (A) par ledit module de sécurité (C,F) par une clé de chiffrement unique stockée au préalable d'une part dans le récepteur (A) et d'autre part dans le module de sécurité (C,F), ladite clé de chiffrement unique formant un appariement entre le module de sécurité (C,F) et le récepteur (A), de manière à ce qu'un module de sécurité donné (C,F) ne puisse être utilisé que dans le récepteur (A) pour lequel le module de sécurité (C,F) a été prévu par le stockage de ladite clé de chiffrement dans le module de sécurité (C,F) et dans le récepteur (A), le récepteur (A) comprenant en outre un numéro personnel qui est aussi inscrit dans le module de sécurité donné (C,F), ledit récepteur (A) pouvant vérifier à tout moment la conformité de ce numéro personnel inscrit dans ledit module de sécurité (C,F) et ainsi la conformité de l'appariement.

2. Système de réception de télévision à péage selon la revendication 1, **caractérisé en ce que** la clé unique de chiffrement est commune à un groupe de récepteurs.

3. Système de réception de télévision à péage selon les revendications 1 ou 2, **caractérisé en ce qu'**au moins une partie des informations (3,5) transmises du récepteur (A) vers le module de sécurité (C,F) sont chiffrées par une clé de chiffrement unique.

4. Système de réception de télévision à péage selon la revendication **1, 2** ou **3, caractérisé en ce que** le numéro personnel comporte une partie propre à un groupe de récepteurs et une partie propre à un récepteur, et que la vérification de la conformité de l'appariement s'effectue sur la partie propre au groupe de récepteur.

5. Système de réception de télévision à péage selon les revendications 1 à **4, caractérisé en ce que** le récepteur (A) comprend une unité de contrôle (B) et que le module de sécurité est un module de sécurité détachable (C) dans lequel les informations sensibles et/ou nécessaires (4) au fonctionnement de l'unité de contrôle (B) sont stockées.

6. Système de réception de télévision à péage selon les revendications 1 à **4, caractérisé en ce que** le module de sécurité est un module de débrouillage et de sécurité détachable (F) comprenant une unité de contrôle (B) et une unité de sécurité (C') responsables du débrouillage et de l'autorisation des informations vidéos.

7. Système de réception de télévision à péage comprenant une pluralité de récepteurs (A) et une pluralité d'ensembles de moyens de sécurité, dont un récepteur (A) est connecté à un ensemble de moyens de sécurité (C,D) dans lequel chaque ensemble de moyens de sécurité comprend un module de sécurité détachable (C) et un module de débrouillage détachable (D) incluant une unité de contrôle (B), ce récepteur (A) recevant des informations dudit ensemble de moyens de sécurité (C,D), et dans lequel au moins une partie des informations sensibles et/ou nécessaires (4) au fonctionnement de l'unité de contrôle (B) sont chiffrées avant d'être transmises au module de débrouillage détachable (D) par le module de sécurité détachable (C) au moyen d'une clé de chiffrement unique stockée au préalable d'une part dans le module de débrouillage détachable (D) et d'autre part dans le module de sécurité détachable (C), ladite clé de chiffrement unique formant un appartement entre le module de sécurité détachable (C) et le module de débrouillage détachable (D), de manière à ce qu'un module de sécurité donné (C) ne puisse être utilisé qu'avec le module de débrouillage pour lequel le module de sécurité (C) a été prévu par le stockage de ladite clé de chiffrement dans le module de sécurité (C) et dans le module de débrouillage détachable (D), le module de débrouillage détachable (D) comprenant en outre un numéro personnel qui est aussi inscrit dans le module de sécurité détachable donné (C), ledit module de débrouillage détachable (D) pouvant vérifier à tout moment la conformité de ce numéro personnel inscrit dans ledit module de sécurité détachable (C) et ainsi la conformité de l'appariement.

8. Système de réception de télévision à péage selon la revendication **7**, **caractérisé en ce qu'**au moins une partie des informations (3) transmises du module de débrouillage détachable (D) vers le module de sécurité (C) sont chiffrées par une clé de chiffrement unique.

9. Système de réception de télévision à péage selon la revendication **7** ou **8, caractérisé en ce que** le numéro personnel comporte une partie propre à un groupe de modules de débrouillage détachables (D) et une partie propre à un module de débrouillage détachable (D), et que la vérification de la conformité de l'appariement s'effectue sur la partie propre au groupe de modules de débrouillage détachables (D).

10. Système de réception de télévision à péage selon les revendications **8** à **9, caractérisé en ce qu'**au moins une partie des informations (5) transmises du récepteur (A) vers le module de débrouillage détachable (D) sont chiffrées par une clé de chiffrement unique.

11. Système de réception de télévision à péage selon les revendications **7** à **10, caractérisé en ce qu'**au moins une partie des informations (6) transmises du module de débrouillage détachable (D) vers le récepteur (A) sont chiffrées par une clé de chiffrement unique.

12. Système de réception de télévision à péage selon les revendications **10** à **11, caractérisé en ce que** Je récepteur (A) comprend un numéro personnel inscrit dans le module de débrouillage détachable (D), ledit récepteur (A) pouvant vérifier à tout moment la conformité de ce numéro personnel inscrit dans ledit module de débrouillage détachable (D).

13. Méthode de contrôle de transmission d'informations dans un système de réception de télévision à péage selon la revendication 1 entre un récepteur (A) et un module de sécurité (C,F), ce dernier envoyant au récepteur (A) les informations permettant de débrouiller le signal audio et vidéo, dans laquelle l'on stocke au préalable au moins une clé de chiffrement unique, d'une part dans le récepteur (A), et d'autre part dans le module de sécurité, et que l'on chiffre et déchiffre les informations transmises entre le récepteur (A) et le module de sécurité au moyen de ladite clé de chiffrement unique, ladite clé de chiffrement unique formant un appariement entre le module de sécurité (C,F) et le récepteur (A) de manière à ce qu'un module de sécurité donné (C,F) ne puisse être utilisé que dans le récepteur (A) pour lequel le module de sécurité (C,F) a été prévu par le stockage de ladite clé de chiffrement dans le module de sécurité (C,F) et dans le récepteur (A), et dans laquelle un numéro personnel au récepteur (A) est aussi inscrit dans le module de sécurité lors d'une opération d'initialisation et le récepteur (A) peut contrôler à tout moment la conformité de ce numéro personnel inscrit dans lesdits moyens des sécurité et ainsi la conformité de l'appariement.

14. Module de sécurité détachable (C,F) destiné à être connecté à un récepteur (A) comme partie d'un système de réception de télévision à péage selon la revendication 1, comprenant au moins une mémoire non volatile destinée au stockage des données sensibles et/ou nécessaires au fonctionnement du système de débrouillage, des moyens de transmission avec le récepteur (A), dans lequel ledit module de sécurité détachable (C,F) comprend des moyens de chiffrement de la transmission, cette mémoire comprenant également au moins une clé de chiffrement unique stockée au préalable d'une part dans cette mémoire et d'autre part dans le récepteur (A) correspondant, ladite clé de chiffrement unique agissant sur les moyens de chiffrement de la transmission formant un appariement avec le récepteur (A), de manière à ce qu'un module de sécurité donné (C,F) ne puisse être utilisé que dans le récepteur (A) pour lequel le module de sécurité (C,F) a été prévu par le stockage de ladite clé de chiffrement dans le module de sécurité (C,F) et dans le récepteur (A), le récepteur A comprenant en outre un numéro personnel qui est aussi inscrit dans le module de sécurité (C,F), ledit récepteur (A) pouvant vérifier à tout moment la conformité de ce numéro personnel inscrit dans ledit module de sécurité (C,F) et ainsi la conformité de l'appariement.

15. Module de débrouillage détachable (D) faisant partie d'un système de réception de télévision à péage selon la revendication 7, comprenant une unité de contrôle (B), des premiers moyens de transmission (3, 4) avec un module de sécurité détachable (C), des deuxièmes moyens de transmission (5, 6) avec un récepteur (A), ainsi qu'une mémoire non volatile, comprenant des premiers moyens de chiffrement, cette mémoire comprenant au moins une clé de chiffrement unique stockée au préalable d'une part dans cette mémoire et d'autre part dans le module de sécurité détachable (C) correspondant, ladite clé de chiffrement agissant sur les premiers moyens de chiffrement destinés à chiffrer la transmission des premiers moyens de transmission (3,4) formant ainsi un appariement entre le module de débrouillage détachable (D) et le module de sécurité détachable (C), de manière à ce que le module de débrouillage détachable (D) ne puisse être utilisé qu'avec un module de sécurité détachable donné (C) pour lequel le module de débrouillage détachable (D) a été prévu par le stockage de ladite clé de chiffrement dans le module de sécurité (C) et dans le module de débrouillage détachable (D), le module de débrouillage détachable (D) comprenant en outre un numéro personnel qui est aussi inscrit dans le module de sécurité détachable donné (C), ledit module de débrouillage détachable (D) pouvant vérifier à tout moment la conformité de ce numéro personnel inscrit dans ledit module de sécurité détachable (C) et ainsi la conformité de l'appariement.

16. Module de débrouillage détachable (D) selon la revendication **15, caractérisé en ce qu'**il comprend des deuxièmes moyens de chiffrement, et que cette mémoire comprend au moins une clé de chiffrement agissant sur les deuxièmes moyens de chiffrement destinés à chiffrer la transmission des deuxièmes moyens de transmission (5,6).

17. Récepteur de débrouillage pour télévision à péage (A) faisant partie d'un système de réception de télévision à péage selon la revendication 1, comprenant des moyens de transmission vers un module de sécurité (C,F), ainsi qu'une mémoire non volatile, comprenant des moyens de chiffrement de la transmission de et vers le module de sécurité (C,F), cette mémoire comprenant au moins une clé de chiffrement unique stockée au préalable d'une part dans cette mémoire et d'autre part dans le module de sécurité (C,F) correspondant, ladite clé de chiffrement agissant sur les moyens de chiffrement de la transmission formant ainsi un appariement entre ledit récepteur (A) et le module de sécurité (C,F), de manière à ce que le récepteur (A) ne puisse être utilisé qu'avec un module de sécurité donné (C,F) pour lequel le récepteur (A) a été prévu par le stockage de ladite clé de chiffrement dans le module de sécurité (C,F) et dans le récepteur (A), le récepteur de débrouillage détachable (D) comprenant en outre un numéro personnel qui est aussi inscrit dans le module de sécurité détachable donné (C,F), ledit récepteur de débrouillage détachable (D) pouvant vérifier à tout moment la conformité de ce numéro personnel inscrit dans ledit module de sécurité détachable (C,F) et ainsi la conformité de l'appariement.

## Claims

1. Pay-TV reception system comprising a plurality of receivers (A) and a plurality of security modules (C, F), in which one receiver (A) is connected with one security module (C; F), this receiver (A) receiving descrambling information from the security module (C, F) in which at least part of the information (4, 6) are encrypted prior transmission to the receiver (A) by said security module (C, F) by a unique encryption key previously stored in one side into the receiver (A) and in the other side into the security module (C, F), said unique encryption key forming a pairing between the security module (C, F) and the receiver (A) so that a given security module (C, F) is only used in the receiver (A) for which the security module (C, F) was foreseen by the storage of said encryption key into the security module (C, F) and into the receiver (A), the receiver (A) comprising a unique personal number which is also written into the given security module (C, F), said receiver (A) could verify at any time the conformity of the personal number written into said security module (C, F) and so the conformity of the pairing.

2. Pay-TV reception system according to Claim 1, **characterized in that** the unique encryption key is common to a group of receivers.

3. Pay-TV reception system according to Claim 1 or 2, **characterized in that** at least some of the information (3, 5) sent from the receiver (A) to the security module (C, D, F) is encrypted by a unique encryption key.

4. Pay-TV reception system according to Claim 1 , 2 or 3, **characterized in that** the personal number comprises a part specific to a group of receivers and a part specific to one receiver and **in that** the conformity of the pairing is verified on the part specific to the group of receivers.

5. Pay-TV reception system according to Claims 1 to 4, **characterized in that** the receiver (A) includes a control unit (B) and **in that** the security module consist of a detachable security module (C) in which the confidential information (4) and/or the information (4) necessary for the operation of the control unit (B) is stored.

6. Pay-TV reception system according to Claims 1 to 4, **characterized in that** the security module is a detachable descrambling-security module (F) comprising a control unit (B) and a security unit (C'), these units being responsible for descrambling and for authorizing the video information.

7. Pay-TV reception system comprising a plurality of receivers (A) and a plurality of set of security means, in which one receiver (A) is connected with one set of security means (C, D) in which each set of security means set (C, D) comprises a detachable security module (C) and a detachable descrambling module (D) including a control unit (B), this receiver (A) receiving descrambling information from said set of security means (C, D) in which at least part of the confidential and/or necessary information (4) to the functioning of the control unit (B) are encrypted prior transmission to the detachable descrambling unit (D) by said detachable security module (C) by a unique encryption key previously stored on one side into the detachable descrambling unit (D) and in the other side into the detachable security module (C), said unique encryption key forming a pairing between the detachable security module (C) and the detachable descrambling unit (D) so that a given security module (C) is only used with the descrambling unit (D) for which the detachable security module (C) was foreseen by the storage of said encryption key into the security module (C) and into the detachable descrambling unit (D), the detachable descrambling unit (D) comprising a unique personal number which is also written into the given detachable security module (C), said detachable descrambling unit (D) could verify at any time the conformity of the personal number written into said detachable security module (C) and so the conformity of the pairing.

8. Pay-TV reception system according to Claim 7, **characterized in that** at least some of the information (3) sent from the detachable descrambling module (D) to the security module (C) is encrypted by a unique encryption key.

9. Pay-TV reception system according to Claim 7 or 8, **characterized in that** the personal number comprises a part specific to a group of detachable descrambling modules (D) and a part specific to one detachable descrambling module (D) and **in that** the conformity of the matching is verified on the part specific to the group of detachable descrambling modules (D).

10. Pay-TV reception system according to Claims 8 to 9, **characterized in that** at least some of the information (5) sent from the receiver (A) to the detachable descrambling module (D) is encrypted by a unique encryption key.

11. Pay-TV reception system according to Claims 7 to 10, **characterized in that** at least some of the information (6) sent from the detachable descrambling module (D) to the receiver (A) is encrypted by a unique encryption key.

12. Pay-TV reception system according to either of Claims 10 to 11, **characterized in that** the receiver (A) includes a personal number which may be written in the detachable descrambling module (D), said receiver (A) could verify at any time the conformity of this personal number written in the said detachable descrambling module (D).

13. Method of controlling the transmission of information in a Pay-TV reception system according to claim 1 between a receiver (A) and security module (C, F), this security module sending to the receiver (A) descrambling information allowing the decryption of the video and audio signals, and in which it is previously stored at least a unique encryption key in one side into the receiver (A) and in the other side into the security module (C, F), and the information transmitted between the receiver (A) and the security module (C, F) are encrypted and decrypted by the said unique encryption key, said unique encryption key forming a pairing between the security module (C, F) and the receiver (A) so that a given security module (C, F) is only used in the receiver (A) for which the security module (C, F) was foreseen by the storage of said encryption key into the security module (C, F) and into the receiver (A), and in which a personal number of the receiver (A) is also written into the security module (C, F) during an initialization step, said receiver (A) could verify at any time the conformity of the personal number written into said security module (C, F) and so the conformity of the pairing.

14. Detachable security module (C, F) intended to be connected to a receiver (A) as part of a Pay-TV reception system according to claim 1, comprising at least one non-volatile memory intended for storing the confidential data and/or the data necessary for operating the descrambling system, transmission means with the receiver (A), in which that said detachable security module (C, F) includes transmission encryption means, this memory also includes at least one encryption key previously stored in this memory on one side and into the corresponding receiver (A) on the other side, said unique encryption key acting on the transmission encryption means thus forming a pairing with the corresponding receiver (A) so that a given security module (C, F) is only used in the receiver (A) for which the security module (C, F) was foreseen by the storage of said encryption key into the security module (C, F) and into the receiver (A), the receiver (A) comprising a personal number which is also written into the security module (C, F), said receiver (A) could verify at any time the conformity of the personal number written into said security module (C, F) and so the conformity of the pairing.

15. Detachable descrambling module (D) being part of a pay-TV reception system according to claim 7, comprising a control unit (B), first transmission means (3, 4) with a detachable security module (C), second transmission means (5, 6) with a receiver (A), and a non-volatile memory, comprising first encryption means, this memory comprising at least one unique encryption key previously stored on one side into this memory and on the other side into the corresponding detachable security module (C), said encryption key acting on the first encryption means intended to encrypt the transmission of the first transmission means (3, 4) so forming a pairing between the detachable descrambling module (D) and the detachable security module (C) so that a detachable descrambling module (D) is only used in a given detachable security module (C) for which the detachable descrambling module (D) was foreseen by the storage of said pairing key into the detachable descrambling module (D) and the detachable descrambling module (D), said detachable descrambling module (D) comprising a personal number which is also written into the given detachable security module (C), said detachable descrambling module (D) could verify at any time the conformity of the personal number written into said detachable security module (C) and so the conformity of the pairing.

16. Detachable descrambling module (D) according to Claim 15, **characterized in that** it includes second encryption means and **in that** this memory includes at least one encryption key which acts on the second encryption means intended for encrypting the transmission of the second transmission means (5, 6).

17. Pay television descrambling receiver (A) being part of a pay-TV reception system according to claim 1, comprising transmission means to security module (C, F), as well as a non-volatile memory, comprising encryption means for the transmission from and to the security module (C, F), this memory including at least one unique encryption key previously stored on one side into this memory and on the other side into the corresponding security module (C, F), said encryption key acting on the encryption means of the transmission means forming a pairing between the receiver (A) and the security module (C, F) so that the receiver (A) is only used in a given security module (C, F) for which the receiver (A) was foreseen by the storage of said encryption key into the security module (C, F) and the receiver (A), the detachable descrambling module (D) comprising additionally a personal number which is also written into the given detachable security module (C, F), said detachable descrambling module (D) could verify at any time the conformity of the personal number written into said detachable security module (C, F) and so the conformity of the pairing.

## Patentansprüche

1. Empfangssystem für Abonnentenfernsehen mit mehreren Empfängern (A) und mehreren Sicherheitsmodulen (C,F), wobei ein Empfänger (A) mit einem Sicherheitsmodul (C, F) verbunden ist und der Empfänger (A) auf diese Weise Entschlüsselungsdaten von dem Sicherheitsmodul (C,F) erhält, in dem mindestens ein Teil der Daten (4, 6) chiffriert ist, bevor er durch das besagte Sicherheitsmodul (C,F) an den Empfänger (A) übermittelt wird, und zwar über einen einmaligen Chiffrierschlüssel, der zuvor einerseits im Empfänger (A) und andererseits im Sicherheitsmodul (C,F) gespeichert wurde, wobei dieser Chiffrierschlüssel eine Paarung zwischen dem Sicherheitsmodul (C,F) und dem Empfänger (A) bildet, so dass ein gegebenes Sicherheitsmodul (C,F) nur in dem Empfänger (A) verwendet werden kann, für den das Sicherheitsmodul (C,F) durch die Speicherung des besagten Chiffrierschlüssels im Sicherheitsmodul (C,F) und im Empfänger (A) vorgesehen wurde, wobei der Empfänger (A) außerdem eine persönliche Zahl enthält, die ebenfalls in dem gegebenen Sicherheitsmodul (C,F) eingeschrieben ist, so dass der Empfänger (A) jederzeit die Übereinstimmung der im Sicherheitsmodul (C,F) eingeschriebenen persönlichen Zahl und damit die Übereinstimmung der Paarung überprüfen kann.

2. Empfangssystem für Abonnentenfernsehen nach Anspruch 1, **dadurch gekennzeichnet, dass** der einmalige Chiffrierschlüssel einer Gruppe von Empfängern gemein ist.

3. Empfangssystem für Abonnentenfernsehen nach Anspruch 1 oder 2, **dadurch gekennzeichnet, dass** mindestens ein Teil der vom Empfänger (A) an das Sicherheitsmodul (C,F) übermittelten Daten (3,5) durch einen einmaligen Chiffrierschlüssel verschlüsselt ist.

4. Empfangssystem für Abonnentenfernsehen nach Anspruch 1, 2 oder 3, **dadurch gekennzeichnet, dass** die persönliche Zahl einen einer Gruppe von Empfängern und einen einem Empfänger eigenen Teil umfasst und dass die Überprüfung der Übereinstimmung der Paarung an dem der Gruppe von Empfängern eigenen Teil erfolgt.

5. Empfangssystem für Abonnentenfernsehen nach den Ansprüchen 1 - 4, **dadurch gekennzeichnet, dass** der Empfänger (A) eine Kontrolleinheit (B) umfasst und dass das Sicherheitsmodul ein separierbares Sicherheitsmodul (C) ist, in dem die sensiblen und/oder für den Betrieb der Kontrolleinheit (B) notwendigen Daten (4) gespeichert sind.

6. Empfangssystem für Abonnentenfernsehen nach den Ansprüchen 1 - 4, **dadurch gekennzeichnet, dass** das Sicherheitsmodul ein separierbares Entschlüsselungs- und Sicherheitsmodul (F) mit einer Kontrolleinheit (B) und einer Sicherheitseinheit (C') ist, die für die Entschlüsselung und für die Autorisierung der Videodaten verantwortlich sind.

7. Empfangssystem für Abonnentenfernsehen mit mehreren Empfängern (A) und mehreren Sicherheitsorganblöcken, wobei ein Empfänger (A) mit einem Sicherheitsorganblock (C, D) verbunden ist, jeder Sicherheitsorganblock ein separierbares Sicherheitsmodul (C) und ein separierbares Entschlüsselungsmodul (D) einschließlich einer Kontrolleinheit (B) umfasst und der Empfänger (A) auf diese Weise Daten von dem besagten Sicherheitsorganblock (C,D) erhält, und in dem mindestens ein Teil der sensiblen und/oder für den Betrieb der Kontrolleinheit (B) notwendigen Daten (4) chiffriert ist, bevor er durch das separierbare Sicherheitsmodul (C) an das separierbare Entschlüsselungsmodul (D) übermittelt wird, und zwar über einen einmaligen Chiffrierschlüssel, der zuvor einerseits im separierbaren Entschlüsselungsmodul (D) und andererseits im separierbaren Sicherheitsmodul (C) gespeichert wurde, wobei dieser Chiffrierschlüssel eine Paarung zwischen dem separierbaren Sicherheitsmodul (C) und dem separierbaren Entschlüsselungsmodul (D) bildet, so dass ein gegebenes Sicherheitsmodul (C) nur mit dem Entschlüsselungsmodul verwendet werden kann, für den das Sicherheitsmodul (C) durch die Speicherung des besagten Chiffrierschlüssels im Sicherheitsmodul (C) und im separierbaren Entschlüsselungsmodul (D) vorgesehen wurde, wobei das separierbare Entschlüsselungsmodul (D) außerdem eine persönliche Zahl enthält, die ebenfalls in dem gegebenen Sicherheitsmodul (C) eingeschrieben ist, so dass das separierbare Entschlüsselungsmodul (D) jederzeit die Übereinstimmung der im separierbaren Sicherheitsmodul (C) eingeschriebenen persönlichen Zahl und damit die Übereinstimmung der Paarung überprüfen kann.

8. Empfangssystem für Abonnentenfernsehen nach Anspruch 7, **dadurch gekennzeichnet, dass** mindestens ein Teil der vom separierbaren Entschlüsselungsmodul (D) zum Sicherheitsmodul (C) übermittelten Daten (3) durch einen einmaligen Chiffrierschlüssel verschlüsselt ist.

9. Empfangssystem für Abonnentenfernsehen nach Anspruch 7 oder 8, **dadurch gekennzeichnet, dass** die persönliche Zahl einen einer Gruppe von separierbaren Entschlüsselungsmodulen (D) und einen einem separierbaren Entschlüsselungsmodul (D) eigenen Teil umfasst und dass die Überprüfung der Übereinstimmung der Paarung an dem der Gruppe von separierbaren Entschlüsselungsmodulen (D) eigenen Teil erfolgt.

10. Empfangssystem für Abonnentenfernsehen nach den Ansprüchen 8 - 9, **dadurch gekennzeichnet, dass** mindestens ein Teil der vom Empfänger (A) zum separierbaren Entschlüsselungsmodul (D) übermittelten Daten (5) durch einen einmaligen Chiffrierschlüssel verschlüsselt ist.

11. Empfangssystem für Abonnentenfernsehen nach den Ansprüchen 7-10, **dadurch gekennzeichnet, dass** mindestens ein Teil der vom separierbaren Entschlüsselungsmodul (D) zum Empfänger (A) übermittelten Daten (6) durch einen einmaligen Chiffrierschlüssel verschlüsselt ist.

12. Empfangssystem für Abonnentenfernsehen nach den Ansprüchen 10 - 11, **dadurch gekennzeichnet, dass** der Empfänger (A) eine persönliche Zahl enthält, die in dem separierbaren Entschlüsselungsmodul (D) eingeschrieben ist, wobei der Empfänger (A) jederzeit die Übereinstimmung der im besagten separierbaren Entschlüsselungsmodul (D) eingeschriebenen persönlichen Zahl überprüfen kann.

13. Verfahren zur Kontrolle der Datenübermittlung in einem Empfangssystem für Abonnentenfernsehen nach Anspruch 1 zwischen einem Empfänger (A) und einem Sicherheitsmodul (C,F), wobei letzteres dem Empfänger (A) die Daten zum Entschlüsseln des Audio- und Videosignals übermittelt, wobei zuvor mindestens ein einmaliger Chiffrierschlüssel einerseits im Empfänger (A) und andererseits im Sicherheitsmodul gespeichert wird und die zwischen dem Empfänger (A) und dem Sicherheitsmodul durch den besagten einmaligen Chiffrierschlüssel übermittelten Daten verschlüsselt und entschlüsselt werden, wobei dieser einmalige Chiffrierschlüssel eine Paarung zwischen dem Sicherheitsmodul (C,F) und dem Empfänger (A) bildet, so dass ein gegebenes Sicherheitsmodul (C,F) nur in dem Empfänger (A) verwendet werden kann, für den das Sicherheitsmodul (C,F) durch die Speicherung des besagten Chiffrierschlüssels im Sicherheitsmodul (C,F) und im Empfänger (A) vorgesehen wurde, und wobei eine persönliche Zahl im Empfänger (A) bei einem Initialisierungsvorgang auch im Sicherheitsmodul eingeschrieben wird und der Empfänger (A) jederzeit die Übereinstimmung der in das besagte Sicherheitsmodul eingeschriebenen persönlichen Zahl und damit die Übereinstimmung der Paarung überprüfen kann.

14. Separierbares Sicherheitsmodul (C,F) für den Anschluss an einen Empfänger (A) als Teil eines Empfangssystems für Abonnentenfernsehen nach Anspruch 1 mit mindestens einem nicht volatilen Speicher für die Speicherung der sensiblen und/oder für den Betrieb des Entschlüsselungssystems notwendigen Daten, mit Übermittlungsorganen zum Empfänger (A), wobei das besagte separierbare Sicherheitsmodul (C,F) Mittel zur Chiffrierung der Übermittlung umfasst und der Speicher ebenfalls mindestens einen einmaligen Chiffrierschlüssel enthält, der zuvor einerseits in diesem Speicher und andererseits im entsprechenden Empfänger (A) gespeichert wurde, wobei der besagte einmalige Chiffrierschlüssel auf die mit dem Empfänger (A) eine Paarung bildenden Mittel zur Chiffrierung der Übermittlung wirkt, so dass ein gegebenes Sicherheitsmodul (C,F) nur in dem Empfänger (A) verwendet werden kann, für den das Sicherheitsmodul (C,F) durch die Speicherung des besagten Chiffrierschlüssels im Sicherheitsmodul (C,F) und im Empfänger (A) vorgesehen wurde, wobei der Empfänger (A) außerdem eine persönliche Zahl enthält, die ebenfalls in dem Sicherheitsmodul (C,F) eingeschrieben ist, so dass der Empfänger (A) jederzeit die Übereinstimmung der im Sicherheitsmodul (C,F) eingeschriebenen persönlichen Zahl und damit die Übereinstimmung der Paarung überprüfen kann.

15. Separierbares Entschlüsselungsmodul (D) als Teil eines Empfangssystems für Abonnentenfernsehen nach Anspruch 7 bestehend aus einer Kontrolleinheit (B), aus ersten Übermittlungsorganen (3, 4) mit einem separierbaren Sicherheitsmodul (C), aus zweiten Übermittlungsorganen (5, 6) mit einem Empfänger (A) sowie aus einem nicht volatilen Speicher mit ersten Chiffriermitteln, wobei dieser Speicher mindestens einen einmaligen Chiffrierschlüssel enthält, der zuvor einerseits in diesem Speicher und andererseits im entsprechenden separierbaren Sicherheitsmodul (C) gespeichert wurde, wobei der besagte einmalige Chiffrierschlüssel auf die ersten Chiffriermittel für die Verschlüsselung der Übermittlung der ersten Übermittlungsorgane (3, 4) wirkt und **dadurch** eine Paarung zwischen dem separierbaren Entschlüsselungsmodul (D) und dem separierbaren Sicherheitsmodul (C) bildet, so dass das separierbare Entschlüsselungsmodul (D) mit einem gegebenen separierbaren Sicherheitsmodul (C) verwendet werden kann, für das das Entschlüsselungsmodul (D) durch die Speicherung des besagten Chiffrierschlüssels im Sicherheitsmodul (C) und im separierbaren Entschlüsselungsmodul (D) vorgesehen wurde, wobei das Entschlüsselungsmodul (D) außerdem eine persönliche Zahl besitzt, die ebenfalls in dem gegebenen separierbaren Sicherheitsmodul (C) eingeschrieben ist, so dass das besagte separierbare Entschlüsselungsmodul (D) jederzeit die Übereinstimmung der im separierbaren Sicherheitsmodul (C) eingeschriebenen persönlichen Zahl und damit die Übereinstimmung der Paarung überprüfen kann.

16. Separierbares Entschlüsselungsmodul (D) nach Anspruch 15, **dadurch gekennzeichnet, dass** es zweite Chiffriermittel besitzt und dass der Speicher mindestens einen Chiffrierschlüssel umfasst, der auf die zweiten Chiffriermittel für die Verschlüsselung der Übermittlung der zweiten Übermittlungsorgane (5,6) wirkt.

17. Entschlüsselungsempfänger für Abonnentenfernsehen (A) als Teil eines Empfangssystems für Abonnentenfernsehen nach Anspruch 1 mit Übermittlungsorganen zu einem Sicherheitsmodul (C,F) sowie mit einem nicht volatilen Speicher, der Chiffriermittel für die Übermittlung von und zu dem Sicherheitsmodul (C,F) umfasst, wobei dieser Speicher mindestens einen einmaligen Chiffrierschlüssel enthält, der zuvor einerseits in diesem Speicher und andererseits in dem entsprechenden Sicherheitsmodul (C,F) gespeichert wurde, wobei der besagte Chiffrierschlüssel so auf die Chiffriermittel der auf diese Weise eine Paarung zwischen dem Empfänger (A) und dem Sicherheitsmodul (C,F) bildenden Übermittlung wirkt, dass der Empfänger (A) nur mit einem gegebenen Sicherheitsmodul (C,F) verwendet werden kann, für das der Empfänger (A) durch die Speicherung des besagten Chiffrierschlüssels im Sicherheitsmodul (C,F) und im Empfänger (A) vorgesehen wurde, wobei das separierbare Entschlüsselungsmodul (D) außerdem eine persönliche Zahl enthält, die auch in das gegebene separierbare Sicherheitsmodul (C,F) eingeschrieben ist, wobei das separierbare Entschlüsselungsmodul (D) jederzeit die Übereinstimmung der im separierbaren Sicherheitsmodul (C,F) eingeschriebenen persönlichen Zahl und damit die Übereinstimmung der Paarung überprüfen kann.
